Europäisches Patentamt

European Patent Office

Office européen des brevets

(19)

(11) Numéro de publication: **0 226 727 B1**

# FASCICULE DE BREVET EUROPEEN

(12)

(45) Date de publication de fascicule du brevet:
30.10.91

(51) Int. Cl.5: **A23G 1/02**

(21) Numéro de dépôt: 86113327.0

(22) Date de dépôt: 27.09.86

(54) **Procédé d'alcalinisation de cacao en phase aqueuse.**

(30) Priorité: 07.11.85 CH 4783/85

(43) Date de publication de la demande:
01.07.87 Bulletin 87/27

(45) Mention de la délivrance du brevet:
30.10.91 Bulletin 91/44

(84) Etats contractants désignés:
AT BE CH DE FR GB IT LI LU NL SE

(56) Documents cités:
EP-A- 0 066 304
FR-A- 2 154 576
GB-A- 2 046 074
US-A- 2 558 854
US-A- 3 754 928
US-A- 3 997 680
DE-A- 3 112 994
FR-A- 2 445 698
US-A- 2 380 158
US-A- 3 056 677
US-A- 3 868 469

(73) Titulaire: **SOCIETE DES PRODUITS NESTLE S.A.**
**Case postale 353**
**CH-1800 Vevey(CH)**

(72) Inventeur: **Wissgott, Ulrich**
**Condémine 40**
**CH-1814 La Tour-De-Peilz(CH)**

Rank Xerox (UK) Business Services

## Description

L'invention concerne un procédé d'alcalinisation de cacao en phase aqueuse pour améliorer la couleur, le goût et la dispersibilité dudit cacao et permettant d'en obtenir une large gamme de couleur, dans lequel on effectue une alcalinisation avec un composé alcalin à une concentration comprise entre 1 et 3% en poids par rapport au poids de cacao et ensuite en évapore l'eau.

Le brevet FR 2 445 698 concerne déjà un procédé pour la solubilisation (ou alcalinisation) du cacao. Pour expliciter de manière plus exhaustive le procédé selon le brevet précité, il y a lieu de préciser les différentes phases de fabrication du cacao soluble: après nettoyage et triage des fèves crues, on effectue un concassage et un dégermage, le produit obtenu constituant le grué.

Sur ce grué, on effectue un prébroyage à la suite duquel les cellules sont brisées et libèrent le beurre de cacao, le produit obtenu constituant le grué moulu ou liqueur de cacao, Ce grué moulu est ensuite transformé en pure pâte par broyage fin. Cette pure pâte est finalement débeurrée et c'est à partir des tourteaux obtenus qu'on prépare la poudre de cacao. La torréfaction du cacao peut avoir lieu sur les fèves, sur le grué, sur le grué moulu ou sur la pure pâte. Le procédé selon le brevet français peut être mis en oeuvre aussi bien sur le grué moulu, vert ou torréfié que sur la pure pâte ou les tourteaux. Selon ce procédé, on injecte en continu dans la masse de cacao de la vapeur et une solution concentrée d'un carbonate alcalin sous pression dans un tube, on laisse réagir le carbonate avec la masse de cacao à au moins 120°C durant 30 à 80 secondes, on soumet le mélange à une détente brusque et on le sèche sous agitation. Outre l'inconvénient de travailler à une température d'alcalinisation relativement élevée, ce procédé ne permet pas de fabriquer des poudres de cacao dans une large gamme de couleur, en particulier dans les teintes rouges ou rouges-brunes. Or, des cacaos dans de telles teintes sont très recherchés à l'heure actuelle, car ils ont une forte capacité de coloration, permettant ainsi d'éviter l'emploi de colorants alimentaires qui sont interdits dans de nombreux pays. Il est bien entendu que ces cacaos ont encore d'autres avantages qui seront exposés ci-dessous.

Le brevet EP 66 304 concerne une poudre de cacao ayant cette teinte rouge ou rouge-brune. Cette poudre est obtenue en effectuant une alcalinisation de poudre de cacao avec environ 75% d'eau à une température comprise entre 65 et 90°C pendant 4 à 24 heures, de l'eau supplémentaire étant ajoutée au fur et à mesure de son évaporation. L'inconvénient majeur de ce mode opératoire est qu'il nécessite une longue durée d'alcalinisation et un apport d'énergie accru lors de l'évaporation finale compte tenu des additions d'eau en cours d'alcalinisation.

Le brevet US 3,056,677 concerne également un procédé d'alcalinisation de cacao, dans lequel on procède en deux étapes, la seconde étape durant plus de dix heures. Le fait de travailler en deux étapes pendant plus de dix heures, notamment 30 et 44 heures dans la seconde étape, rend ce procédé peu intéressant sur le plan économique.

Le brevet US 2,380,158 concerne un procédé d'extraction de cacao, dans lequel on extrait le cacao à une température de 180°C avec de l'eau et on traite ensuite cette phase aqueuse par alcalinisation. Il n'est jamais question selon notre invention, d'extraction préalable avant l'alcalinisation.

On effectue selon le procédé de l'invention l'alcalinisation en une seule étape avec un composé alcalin choisi parmi l'hydroxyde ou le carbonate de sodium, de potassium, d'ammonium ou de magnésium sous une pression comprise entre 1 et 3 atmosphères en une durée comprise entre 30 min et 4 heures à une température inférieure à 110°C. L'intérêt d'opérer tout d'abord sans évaporation d'eau est qu'on peut travailler dans des conditions parfaitement contrôlées et retenir l'eau pendant une durée voulue: la même quantité d'eau étant ainsi disponible tout au long de la réaction d'alcalinisation, ce qui favorise le traitement des polyphénols, responsables en grande partie de la coloration rouge, de l'amertume, du goût chocolaté et la solubilité des pigments du cacao. On introduit ainsi dans une enceinte fermée le cacao et l'agent d'alcalinisation dissout dans l'eau, on chauffe en prenant soin au début de la réaction de laisser s'échapper le gaz carbonique de la réaction, et on poursuit la réaction dans l'enceinte fermée sous agitation intensive et sous une pression comprise entre 1 et 3 atmosphères. Pour créer cette surpression, on introduit dans le mélange réactionnel de l'air, de l'air comprimé ou un mélange de gaz contenant de l'oxygène durant tout ou une partie de la durée d'alcalinisation. Le fait de travailler sous surpression a un effet favorable pour le développement d'une coloration plus intense et rouge du cacao.

Comme on opère dans des conditions contrôlées, on peut choisir la qualité de l'arôme et la couleur du cacao en influant sur tous les paramètres de la réaction d'alcalinisation, à savoir la teneur en alcali, la teneur en eau, la température d'alcalinisation et d'évaporation, ainsi que la durée d'alcalinisation.

Le procédé selon l'invention permet de fabriquer un cacao développant un bon arôme, dont le pH tend vers la neutralité et dont les pigments de la poudre de cacao obtenue se caractérisent par une bonne dissolution, ce qui a un avantage sur le plan économique quant au pouvoir colorant, permettant avec une teneur moins élevée en cacao d'obtenir une coloration plus intense qu'avec les poudres de cacao classiques.

Le procédé selon l'invention peut être mis en oeuvre aussi bien sur le grué que sur la liqueur, à l'état torréfié ou non torréfié. L'alcalinisation se fait de préférence avec le carbonate de potassium.

Une teneur supérieure à 3% en composé alcalin n'apporte rien quant à la coloration rouge et d'autre part fait augmenter le pH. Une teneur inférieure à 1% ne donne pas un milieu suffisamment alcalin. On travaille de préférence avec une quantité d'alcali comprise entre 2 et 2,5% en poids par rapport au poids de cacao.

L'alcali est dissout dans l'eau avant son incorporation dans la masse de cacao. On opère selon l'invention avec une teneur en eau comprise entre 10 et 50% en poids par rapport au poids de cacao dans le cas de la liqueur et avec une teneur en eau comprise entre 10 et 100% dans le cas du grué.

Il est inhérent à la nature de la matière première qu'on utilise plus d'eau pour le traitement du grué, car il absorbe l'eau jusqu'à 70% de son propre poids. Par contre, on utilise moins d'eau pour le traitement de la liqueur et une température plus élevée est mise en oeuvre pour son évaporation. Il est bien entendu peu économique de travailler avec une teneur en eau trop élevée, car cela augmente la consommation d'énergie pour l'évaporation. On opère de préférence avec une teneur en eau comprise entre 10 et 25% par rapport au poids de cacao dans le cas de la liqueur et une teneur en eau comprise entre 60 et 80% dans le cas du grué.

En ce qui concerne la température d'alcalinisation, on l'effectue à moins de 110° C. En effet, à une température supérieure comme dans les procédés connus le cacao est moins foncé et la coloration rouge absente. On travaille de préférence à une température comprise entre 60 et 100° C.

Par rapport au procédé décrit dans le brevet EP 66 304, le procédé selon l'invention permet de raccourcir sensiblement la durée d'alcalinisation. Celle-ci est comprise entre 30 min. et quatre heures. Une longue période d'alcalinisation tend à diminuer le pH, à intensifier la coloration et à développer une bonne couleur rouge du cacao.

Comme déjà mentionné ci-dessus, on effectue selon l'invention d'abord l'alcalinisation dans un récipient fermé, puis on ouvre le récipient et on procède à l'évaporation de l'eau. Celle-ci est faite à une température comprise entre 70 et 120° C et de la manière la plus rapide possible, soit dans le même récipient que celui dans lequel a eu lieu l'alcalinisation, soit dans un autre récipient. On peut éventuellement appliquer sur une courte durée une température plus élevée vers la fin de l'évaporation. On obtient alors du cacao ayant une teneur en humidité égale ou inférieure à 2%.

Malgré la dose relativement élevée d'alcali employé, le cacao ainsi obtenu est libre du goût alcalin, propre aux cacaos obtenus par les procédés connus. L'opération d'alcalinisation étant terminée, on traite ensuite classiquement la masse de cacao pour en faire des tourteaux et de la poudre de cacao telle que mise sur le marché.

La poudre de cacao ainsi obtenue a un pH compris entre 6,8 et 8,5, ce qui est intéressant car il est connu qu'un cacao acide a un pouvoir colorant moindre qu'un cacao neutre ou légèrement alcalin. L'extrait aqueux de cette poudre a d'autre part une densité optique à 20° C comprise entre 0,6 et 1,3 (solution à 1%, mesure effectuée dans une cuve de 1 cm pour une longueur d'onde de 490 nm). A titre de comparaison, l'extrait d'une poudre de cacao brune ordinaire a une densité optique mesurée dans les mêmes conditions comprise entre 0,2 et 0,5.

La présente invention permet de fabriquer du cacao dans les teintes allant du rouge au brun foncé sans grande consommation d'énergie. Dans les procédés industriels usuels, l'alcalinisation est accompagnée simultanément par l'évaporation d'eau depuis le début du traitement et c'est la raison pour laquelle une température plus élevée est en général mise en oeuvre. Une variation continue des conditions d'alcalinisation est la conséquence de ce mode de travail et la durée du traitement est déterminée par le temps qui est nécessaire pour évaporer l'eau. Un autre inconvénient de ces procédés connus est qu'ils ne peuvent pas être adaptés aux besoins spécifiques de différentes qualités de cacao et fèves de cacao.

La poudre de cacao ainsi obtenu trouve bien entendu de nombreuses applications, soit pour les boissons cacaotées, soit en chocolaterie, soit en pâtisserie, soit en surgelés et autres utilisations, où ses avantages exposés ci-dessus lui confèrent un intérêt accru.

La suite de la description est faite en référence aux exemples. La couleur du cacao ou de la poudre de cacao ayant selon l'invention une grande importance, il est nécessaire de définir les paramètres permettant de mesurer ladite couleur. On a utilisé pour ce faire un spectrophotomètre PYE UNICAM SP 8-100 de Philips équipé avec un accessoire permettant la mesure de la couleur et relié au calculateur HP 85. Ce spectrocolorimètre permet de mesurer le spectre de la lumière réfléchie par un échantillon placé dans une cuvette. L'intensité de la lumière est mesurée pour chaque longueur d'onde. Ces informations permettent d'obtenir les valeur trichromatiques X, Y, Z. En fonction des valeurs trichromatiques on peut repérer toutes les couleurs. Pour être représentées dans un plan, il faut calculer les coordonnées trichromatiques x,y,z à partir des valeurs trichromatiques. Pour représenter la différence de couleur entre deux échantillons, on doit calculer les valeurs L,a,b : L représente la brillance, a la composante rouge (a > 0) et b la composante jaune (b > 0).

La grandeur L varie entre 0 (noir) et 100 (blanc). Plus on se rapproche de zéro, plus le cacao est foncé. En ce qui concerne le rouge, plus le rapport a/b est élevé, plus le cacao a une coloration rouge.

## Exemple 1

250 g de liqueur de cacao, torréfiée provenant d'une ligne de fabrication ont été préchauffés dans un malaxeur de laboratoire. 5 g de carbonate de potassium dissouts dans 50 g d'eau chaude ont été ajoutés à la masse de cacao et mélangés. Le malaxeur a été fermé hermétiquement avec un couvercle et la température a été réglée à 100° C. Une pression a été créée à l'intérieur du malaxeur par raccordement à l'air comprimé. La pression a été réglée à 2 kg/cm² et ces conditions ont été maintenues durant 3 heures. Ensuite, pour sécher la masse de cacao, une ouverture dans le couvercle du malaxeur a été pratiquée, permettant à l'eau de s'évaporer. La température à l'intérieur du réacteur a été augmentée à 120° C et la masse a été séchée durant deux heures jusqu'à une humidité finale de < 2%.

La couleur de la masse de cacao était plus foncée qu'habituellement avec une teinte rougeâtre. Néanmoins le pH ne dépassait pas 7,2.

## Exemple comparatif 1

Une liqueur de cacao a été mélangée avec une solution de carbonate de potassium telle que décrit dans l'exemple 1. La masse a été ensuite traitée telle que dans le procédé industriel habituel c.à.d. le malaxeur a été chauffé à 130° C et n'a pas été fermé. Ainsi l'eau s'est évaporée en 2 heures environ.

La couleur de la masse était brune, comme d'habitude et le pH n'a pas baissé en dessous de 7,8.

Les résultats des mesures de la couleur de la masse de cacao alcalinisée ont confirmé l'observation visuelle. Il est évident qu'on trouve la même différence de couleur sur les poudres de cacao qui sont fabriquées avec ces masses.

|  | pH | L | a | b | a/b |
|---|---|---|---|---|---|
| Exemple 1 | 7,2 | 2,06 | 5,59 | 3,23 | 1,73 |
| Exemple comparatif 1 | 7,8 | 6,03 | 9,40 | 7,21 | 1,30 |

On a mesuré la couleur (L,a,b) de la masse de cacao avec le spectrophotomètre PYE UNICAM en fondant la masse de cacao dans la cuvette.

## Exemple 2

3 kg de grué vert (= non torréfié) ont été granulés (diamètre 2 mm) et ensuite mélangés avec 3 kg d'eau - dans laquelle 75 g de $K_2CO_3$ ont été dissouts - dans un pétrin. La température a été réglée à 80° C (chauffage par double manteau) et le pétrin a été fermé avec un couvercle. Une surpression a été créée avec de l'air comprimé à l'intérieur du pétrin. Après deux heures d'alcalinisation le grué a été transféré dans un séchoir à air, séché à une température de 80° C (environ 1 h30 à 2 heures) et ensuite torréfié à 120° C durant 20 min.

Une poudre de cacao a été produite en effectuant les opérations habituelles (pressage, mouture, tamisage et tempérage).

Résultats de dégustation de la poudre de cacao : couleur très belle, couleur brune-rouge, bien marquée, assez foncée. Qualité organoleptique : goût de cacao très bien développé, arôme très apprécié.

Résultats de mesure de couleur de la poudre de cacao : L = 25,83, a = 15,18, b = 10,95, a/b = 1,38.

## Exemple comparatif 2

Un essai comme décrit dans l'exemple 2 a été effectué, mais sans pression dans le pétrin. En revanche, on a poursuivi l'alcalinisation durant six heures.

Résultats de dégustation de la poudre de cacao : couleur brune tendant au rouge, plus faible , goût de cacao plat, moins développé, pas franc.

Résultats de mesure de couleur de la poudre : L = 30,53, a = 13,46, b = 11,74, a/b = 1,15.

Dans ces exemples L, a et b ont été déterminés en mettant la poudre de cacao directement dans la cuvette de mesure.

Par ces essais comparatifs il a été démontré qu'une pression d'air supérieure à la pression atmosphérique durant l'alcalinisation remplace avantageusement une longue durée d'alcalinisation, nécessaire pour le bon développement de la couleur et du goût à basse température.

Parmi les poudres de cacao commerciales dont la couleur a été mesurée selon la même méthode, aucune n'était aussi foncée (L > 33) et aussi rouge a/b < 0,9.

## Exemple 3

La poudre de cacao fabriquée comme décrit dans l'exemple 2 a été utilisée en pâtisserie en vue d'améliorer la couleur du biscuit. La pâtissier a procédé a un essai comparatif avec une poudre de cacao utilisée normalement pour la production du biscuit. Le résultat, selon le pâtissier a été assez spectaculaire. Le nouveau cacao a donné une couleur beaucoup plus intense et plus chaude tirant sur le brun-rouge.

Il a été estimé qu'en utilisant la nouvelle poudre la dose habituelle de cacao de 4,3% (calculée sur la masse de biscuit) peut être réduite à 2,9% avec résultat équivalent. Ainsi une économie de 30% environ peut être réalisée.

## Exemple 4

a) Une poudre de cacao rouge (1 g) telle que décrite dans l'exemple 2 a été dispersée dans l'eau (100 ml). Après filtration (0,45 $\mu$m) on a obtenu un extrait aqueux de cacao fortement coloré. L'absorption de cet extrait a été mesurée avec le spectrophotomètre PYE UNICAM SP 8-100 à la longueur d'onde de 490 nm (maximum d'absorption).

Résultat : O.D. = 1,09 (cuve de 1 cm)

A titre de comparaison l'extrait d'une poudre de cacao ordinaire (brune) a été préparé et l'absorption mesurée :

Résultat : O.D. = 0,27 (cuve de 1 cm)

La solubilité dans l'eau de la matière colorante d'une poudre de cacao selon l'invention est nettement améliorée par rapport aux poudres ordinaires. Ceci est très intéressant en pratique car une importante quantité de poudre de cacao est utilisée pour la fabrication de boissons cacaotées.

b) Les poudres de cacao ont été dispersées dans l'eau chaude (70 °C). Après filtration l'absorption a été mesurée avec les résultats suivants :

cacao rouge (selon l'invention) O.D. = 1,44

cacao brun (ordinaire) O.D. = 0,47

La dissolution de la matière colorante est encore plus élevée à une température élevée, ce qui est intéressant pour les boissons chaudes de cacao. Le consommateur est attiré par une couleur riche en cacao.

## Revendications

1. Procédé d'alcalinisation de cacao en phase aqueuse pour améliorer sa couleur, son goût et sa dispersibilité et permettant d'en obtenir une large gamme de couleur, dans lequel on effectue une alcalinisation avec un composé alcalin à une concentration comprise entre 1 et 3% en poids par rapport au poids de cacao et ensuite on évapore l'eau, caractérisé en ce qu'on effectue l'alcalinisation en une seule étape avec un composé alcalin choisi parmi l'hydroxyde ou le carbonate de sodium, de potassium, d'ammonium ou de magnésium sous une pression comprise entre 1 et 3 atmosphères en une durée comprise entre 30 min et 4 heures à une température inférieure à 110 °C.

2. Procédé selon la revendication 1, caractérisé en ce qu'on traite le grué ou la liqueur, à l'état torréfié ou non torréfié.

3. Procédé selon la revendication 1, caractérisé en ce qu'on alcalinise à une teneur en alcali comprise entre 2 et 2,5% en poids par rapport au poids de cacao.

4. Procédé selon l'une des revendications 1 à 3, caractérisé en ce qu'on effectue l'alcalinisation à une température comprise entre 60 et 100 °C.

5. Procédé selon l'une des revendications 1 à 4, caractérisé en ce qu'on alcalinise avec une teneur en eau comprise entre 10 et 50% en poids par rapport au poids de cacao, dans le cas de la liqueur et avec une teneur en eau comprise entre 10 et 100% dans le cas du grué.

6. Procédé selon la revendication 5, caractérisé en ce qu'on alcalinise avec une teneur en eau comprise entre 10 et 25% par rapport au poids de cacao dans le cas de la liqueur et avec une teneur en eau comprise entre 60 et 80% dans le cas du grué.

7. Procédé selon l'une des revendications 1 à 6, caractérisé en ce qu'on introduit de l'air ou un mélange de gaz contenant de l'oxygène durant tout ou une partie de la durée d'alcalinisation sous agitation intensive.

8. Procédé selon l'une des revendications 1 à 7, caractérisé en ce qu'on évapore l'eau à une température comprise entre 70 et 120°C, de manière à arriver à une teneur en humidité du cacao de l'ordre de 2%.

9. Procédé selon l'une des revendications 1 à 8, caractérisé en ce qu'on effectue l'alcalinisation et l'évaporation de manière à obtenir une poudre de cacao ayant un pH compris entre 6,8 et 8,5 et l'extrait aqueux une densité optique à 20°C comprise entre 0,6 et 1,3.

## Claims

1. A process for alkalizing cocoa in the aqueous phase to improve its colour, taste and dispersibility and to enable a wide range of colours to be obtained therefrom, in which alkalization is carried out with an alkaline compound in a concentration of 1 to 3% by weight, based on the weight of the cocoa, and the water is subsequently evaporated, characterized in that alkalization is carried out in a single step with an alkaline compound selected from sodium, potassium, ammonium or magnesium hydroxide or carbonate over a period of 30 mins. to 4 hours under a pressure of 1 to 3 atmospheres and at a temperature below 110°C.

2. A process as claimed in claim 1, characterized in that the meal or the liquor, roasted or unroasted, is treated.

3. A process as claimed in claim 2, characterized in that alkalization is carried out to an alkali content of from 2 to 2.5% by weight, based on the weight of the cocoa.

4. A process as claimed in any of claims 1 to 3, characterized in that alkalization is carried out at a temperature of from 60 to 100°C.

5. A process as claimed in any of claims 1 to 4, characterized in that alkalization is carried out with a water content of from 10 to 50% by weight, based on the weight of the cocoa, in the case of liquor and with a water content of from 10 to 100% in the case of meal.

6. A process as claimed in claim 5, characterized in that alkalization is carried out with a water content of from 10 to 25%, based on the weight of the cocoa, in the case of liquor and with a water content of from 60 to 80% in the case of meal.

7. A process as claimed in any of claims 1 to 6, characterized in that air or an oxygen-containing gas mixture is introduced with intensive stirring throughout or during part of the alkalization time.

8. A process as claimed in any of claims 1 to 7, characterized in that the water is evaporated at a temperature of from 70 to 120°C to leave the cocoa with a moisture content of the order of 2%.

9. A process as claimed in any of claims 1 to 8, characterized in that alkalization and evaporation are carried out to obtain a cocoa powder having a pH of from 6.8 to 8.5 and the aqueous extract an optical density at 20°C of from 0.6 to 1.3.

## Patentansprüche

6

1. Verfahren zur Alkalisierung von Kakao in wäßriger Phase zur Verbesserung seiner Farbe, seines Geschmacks und seiner Dispergierbarkeit, das eine große Palette von Farben erreichen läßt, in welchem Verfahren eine Alkalisierung mit einer alkalischen Verbindung bei einer Konzentration von 1 bis 3 Gew.-%, bezogen auf das Gewicht des Kakaos, vorgenommen und anschließend das Wasser verdampft wird, dadurch gekennzeichnet, daµ man die Alkalisierung in einer einzigen Stufe mit einer unter den Hydroxiden oder Karbonaten von Natrium, Kalium, Ammonium oder Magnesium ausgewählten alkalischen Verbindung unter einem Druck von 1 bis 3 Atmosphären und einer Dauer von 30 Minuten bis 4 Stunden bei einer Temperatur unter 110° C ausführt.

2. Verfahren nach Anspruch 1, dadurch gekennzeichnet, daß man den Kakaokernbruch oder die Kakaomasse im gerösteten oder ungerösteten Zustand behandelt.

3. Verfahren nach Anspruch 1, dadurch gekennzeichnet, daß man bis zu einem Alkaligehalt von 2 bis 2,5 Gew.-%, bezogen auf das Gewicht des Kakaos, alkalisiert.

4. Verfahren nach einem der Ansprüche 1 bis 3, dadurch gekennzeichnet, daß man die Alkalisierung bei einer Temperatur von 60 bis 100° C ausführt.

5. Verfahren nach einem der Ansprüche 1 bis 4, dadurch gekennzeichnet, daß man im Falle der Kakaomasse mit einem Wassergehalt von 10 bis 50 Gew.-%, bezogen auf das Gewicht des Kakaos, alkalisiert, und im Falle des Kakaokernbruchs mit einem Wassergehalt von 10 bis 100 % alkalisiert.

6. Verfahren nach Anspruch 5, dadurch gekennzeichnet, daß im Falle der Kakaomasse mit einem Wassergehalt von 10 bis 25 %, bezogen auf das Gewicht des Kakaos, alkalisiert und im Falle des Kakaokernbruchs mit einem Wassergehalt von 60 bis 80% alkalisiert.

7. Verfahren nach einem der Ansprüche 1 bis 6, dadurch gekennzeichnet, daß man während der gesamten Alkalisierungsdauer oder eines Teiles hievon Luft oder ein Sauerstoff enthaltendes Gasgemisch unter heftiger Bewegung einführt.

8. Verfahren nach einem der Ansprüche 1 bis 7, dadurch gekennzeichnet, daß man das Wasser bei einer Temperatur von 70 bis 120° C verdampft, um zu einem Feuchtigkeitsgehalt des Kakaos in der Größenordnung von 2 % zu gelangen.

9. Verfahren nach einem der Ansprüche 1 bis 8, dadurch gekennzeichnet, daß man die Alkalisierung und die Verdampfung derart ausführt, daß ein Kakaopulver mit einem pH-Wert von 6,8 bis 8,5 erhalten wird und der wäßrige Extrakt eine optische Dichte bei 20° C von 0,6 bis 1,3 aufweist.